Europäisches Patentamt

**(19)** European Patent Office

Office européen des brevets

**(11)** Publication number : **0 376 407 B1**

**(12)** # EUROPEAN PATENT SPECIFICATION

**(45)** Date of publication of patent specification :
**11.11.92 Bulletin 92/46**

**(51)** Int. Cl.$^5$ : **A23D 7/00**

**(21)** Application number : **89203327.5**

**(22)** Date of filing : **27.12.89**

**(54)** Butter containing spread and method for the preparation thereof.

**(30)** Priority : **30.12.88 NL 8803216**
**30.12.88 NL 8803217**

**(43)** Date of publication of application :
**04.07.90 Bulletin 90/27**

**(45)** Publication of the grant of the patent :
**11.11.92 Bulletin 92/46**

**(84)** Designated Contracting States :
**AT BE CH DE ES FR GB GR IT LI LU NL SE**

**(56)** References cited :
**EP-A- 0 169 617**
**AU-B- 482 193**
**DD-A- 225 327**
**FR-A- 1 428 761**
**US-A- 4 217 372**

**(73)** Proprietor : **VAN DIJK FOOD PRODUCTS
(LOPIK) B.V.
8, 2e Industrieweg
NL-3411 ME Lopik (NL)**

**(72)** Inventor : **Ebskamp, Hermanus Johannes
Gerardus
7, Mandenmarkerslaan
NL-3454 DA De Meern (NL)**

**(74)** Representative : **van der Kloet-Dorleijn,
Geertruida W.F., Drs. et al
EXTERPATENT B.V. P.O. Box 3241
NL-2280 GE Rijswijk (NL)**

EP 0 376 407 B1

## Description

The invention relates to a spread of the water-in-oil type comprising an intimate mixture of particles of vegetable fats and of milk fat.

A spread of this type is known and comprises, more particularly, the mixture of a prepared margarine phase and a prepared butter phase or a mixture of vegetable fats and milk fat.

The drawback of this known spread is that good, intimate mixing is not obtained on mixing the prepared butter phase with the prepared margarine phase, or a substantial portion of the aroma typical of butter is lost during the preparation of the mixture and the crystallization. Consequently, there is a severe fluctuation in the aroma typical of butter.

A spread has now been found of the type specified in the preamble with which the drawbacks of the known spread have been overcome and the spread therefore has an optimum recognizable butter taste and butter aroma.

The spread according to the invention is characterized in that the spread possesses a structure which is to be obtained by forming an emulsion of at least water, molten vegetable fats and/or oils, a milk cream phase with a milk fat content of 5-70% and 0.5-3% of a lactic acid bacterial culture, subjecting this emulsion to a mechanical treatment while cooling to below 20°C and finally separating off the product obtained and storing it at a conversion temperature at which the lactic acid bacteria form lactic acid and butter aroma substances from substances belonging to the milk cream phase. Appropriately the conversion temperature is lower than 20°C, preferably 5 to 15°C.

The taste of the spread according to the invention is virtually the same as that of butter because the aroma substances which are characteristic of butter are also released or formed during the formation of lactic acid from the milk cream present, under the influence of the lactic acid bacteria present.

A butter phase of this type which is formed in situ also has the consequence that the butter particles are as small as possible and the distribution of the butter particles in the margarine is as good as possible.

Preferably vegetable fats having a melting point above 20°C, and vegetable fluid oil are present, such that the total fat mixture contains at least 40% polyunsaturated fatty acids.

A spread of this type has a favourable influence on the prevention of heart and vascular diseases, whereas the taste of said spread is virtually the same as that of butter. The optimum spreadability is about 7°C (refrigerator temperature).

Appropriately the milk cream phase has a milk fat content of 10-60%, preferably 20-40%.

Said milk fat content appears to be the optimum amount, because the milk cream phase will then comprise milk proteins, butter flavour forming substances and other valuable substances, which are normally present in genuine milk and will be transferred, and are present in such an amount that the ready-for-use product has a particularly good butter taste and a good butter flavour.

According to a particular embodiment, the spread contains more than 30% of water.

Even in the presence of, for example, 50% water it is possible according to the invention, without the addition of a gelling agent for the water phase, to obtain a product which has an excellent taste which is based on the cream phase present.

An optimum effect is achieved if the product to be separated off after the mechanical treatment contains cream particles from which butter particles separate out on storage.

Because the product is stored at a temperature at which the lactic acid bacteria form lactic acid, butter particles are formed from at least a proportion of the fluid cream globules distributed in the solid fat structure, with the formation of the desired structure and taste.

Appropriately 1-1.5% of a lactic acid bacterial culture is used.

Preferably, during the mechanical treatment cooling is interrupted after cooling to a temperature above 20°C, whereupon the temperature rises during the mechanical treatment with the growth of fat kernels to fat crystals, cooling is then continued with mechanical treatment to below 20°C and a product is then separated off in which cream particles are embedded in a solid structure of said fat crystals, from which cream particles butter particles separate out during storage.

It is thus possible to obtain a very fine distribution of both water and fat particles.

More particularly the temperature rises by a minimum of 0.5°C and by a maximum of up to 0.5°C below the melting point of the vegetable fat mixture, preferably 2° to 8°C.

It has been found that this measure leads to a very satisfactory improvement in the taste, the spreadability and other physical properties.

Appropriately, after the mechanical treatment the temperature of the emulsion is lowered to below 20°C, preferably 5-15°C.

Preferably the temperature rises by 2 to 8°C in the period without cooling.

Particularly advantageously the mixture is, during the mechanical treatment and cooling to a temperature above 20°C, cooled until 5 to 70% of the latent heat of crystallization of the fats crystallizable above 10°C has been removed.

It is thus possible to obtain a very specific crystal structure, as a result of which the product ready for consumption is not sticky in the mouth. Moreover, the conversion of the cream particles present in the product into butter particles takes place at this temperature, insofar as this conversion has not already taken place at an earlier stage. This measure signifies more particularly that the conversion of the milk cream phase present into butter particles does not have to have been complete before the storage and/or the transport of the spread ready for consumption, since after all the conversion to butter particles is completed during storage and/or transport at a temperature below 20°C, preferably at a temperature in the range of 5 to 15°C.

More particularly, the conversion will proceed very slowly at a temperature of approximately 5°C. However, when the ready-to-use product is kept at a temperature of approximately 15°C for some time, for example in connection with consumption of the product, the conversion will proceed more rapidly and the butter taste will therefore develop further.

It is pointed out that it is known per se to add butter in the molten state to margarine and to mix the whole thoroughly. Although the distribution of the butter phase and the margarine phase is better than when the solid phases are used as starting materials, melting of the butter results in a substantial loss of aroma substances, as a result of which the taste of the product formed is poorer than that of butter.

On the other hand, the in situ conversion in the spread according to the invention has the consequence that the development of the taste becomes clearer and better as the conversion progresses.

The invention also relates to a method for the preparation of a spread of the water-in-oil type comprising an intimate mixture of particles of vegetable fats and of milk fat which method is characterized in that a spread is continuously prepared which has a structure which is to be obtained by forming an emulsion of at least water, molten vegetable fats and/or oils, a milk cream phase with a milk fat content of 5-70% and 0.5-3% of a lactic acid bacterial culture, subjecting this emulsion to a mechanical treatment while cooling to below 20°C and finally separating off the product obtained and storing it at a conversion temperature at which the lactic acid bacteria form lactic acid and butter aroma substances from substances belonging to the milk cream phase.

Preferably vegetable fats having a melting point above 20°C and vegetable fluid oil are used, such that the total fat mixture contains at least 40% polyunsaturated fatty acids.

Appropriately, a milk cream phase having a milk fat content of 20-40% is used. Such a cream phase will comprise milk proteins, butter aroma substances and other valuable substances in such an amount that the obtained ready-for-use product has a particularly good butter taste and a good butter aroma.

It is advisable that the conversion temperature is lower than 20°C and preferably between 5 and 15°C.

Preferably, the duration of the total mechanical treatment and the temperature are chosen such that the product to be separated off after the mechanical treatment contains cream particles from which butter particles separate out on storage, a product being obtained which has a particularly good butter taste as a consequence of the aroma substances which are likewise liberated.

Appropriately, the cooling is interrupted during the mechanical treatment, after cooling to a temperature above 20°C, and the temperature is allowed to rise while continuing the mechanical treatment, during which period fat kernels grow to fat crystals, after which cooling is continued, with mechanical treatment, to below 20°C and a product is then separated off in which cream particles are embedded in a solid structure of said fat crystals, an optimum distribution of the butter in the non-butter phase being obtained.

Particularly good results with regard to structure are obtained if 5 to 70% of the latent heat of crystallization of the fats crystallizable above 10°C is removed during the mechanical treatment and cooling to a temperature above 20°C.

Preferably, the cooling treatment is interrupted during the mechanical treatment after cooling to a temperature above 20°C and the temperature is allowed to rise while continuing mechanical treatment, during which the fat kernels grow, to a temperature above 20°C until 5 to 70% of the latent heat of crystallization of the fats crystallizable above 10°C has been removed.

Appropriately the temperature is allowed to rise by a minimum of 0.5°C and by a maximum of up to 0.5°C below the melting point of the vegetable fat mixture and after the mechanical treatment the temperature of the emulsion is preferably lowered to below 20°C and more particularly to 5-15°C.

Preferably, 5 to 70% of the latent heat of crystallization of the fats crystallizable above 10°C is removed during the mechanical treatment and cooling to a temperature above 20°C.

Appropriately the temperature rises by 2-8°C in the period without cooling. The milk fat content in the cream phase is preferably between 20 and 70%. Above 80% milk fat is not to be recommended since too few substances are then present which can contribute to the formation of lactic acid and butter aroma.

The invention is explained below in several illustrative embodiments.

## EXAMPLE I

750 kg of 45% cream, 350 kg of solidified transesterified fat obtained from palm oil and coconut, having a melting point between 32 and 42°C, and 1850 kg of sunflower oil are introduced into a mixing vessel which is provided with a stirrer. Additives known for the preparation of margarine, such as colorants, emulsifiers etc., and also 50 kg of a lactic acid bacterial culture are added to this mixture.

This mixture is brought to a temperature of about 50°C, with stirring with the formation of an emulsion.

In a first votator this emulsion is cooled, with mechanical treatment, to a temperature of 27°C and the mixture is then subjected to a mechanical treatment in a treatment vessel which is provided with a rotary shaft with pins.

The temperature is allowed to rise to 34°C while rotating the shaft with pins.

The emulsion obtained is then introduced into a second Votator in which it is cooled to 12°C, with mechanical treatment.

The product obtained is then separated off. After intermediate storage for 4 days at a temperature of 12-14°C, the temperature is further reduced to 7°C and the product stored until consumption.

The product thus obtained has a very homogeneous structure, is not sticky in the mouth and has a clearly detectable taste and aroma of butter. The spreadability of the ready-to-use product at a temperature of approximately 7°C (refrigerator temperature) is particularly good.

EXAMPLE II

The procedure described in Example I has been repeated except that 1250 kg sunflower oil has been used to provide a product having at least 40% polyunsaturated fatty acids.

A product having the same excellent characteristics as obtained according to Example I is obtained.

EXAMPLE III

The procedure described in Example I is repeated except that the cooling is interrupted at a temperature of 24°C and the mixture is then transferred to a treatment vessel in which the temperature of the mixture is allowed to rise to 27°C.

The mixture is then further cooled to 10°C in a second Votator, with mechanical treatment. The product is then ready for packaging. It has a good, homogeneous structure and the taste and aroma of butter and is readily spreadable at approximately 7°C.

EXAMPLE IV

The procedure described in Example I is repeated except that the cooling is interrupted at a temperature of 22°C and the mixture is then transferred to a treatment vessel in which the temperature of the mixture is allowed to rise to 26°C. The mixture is then treated as indicated in Example II and a product with the same characteristics is obtained.

EXAMPLE V

The procedure described in Example I is repeated. However, the cooling is interrupted at a temperature of 26°C and the mixture is then transferred to a treatment vessel in which the temperature of the mixture is allowed to rise to 31°C. The subsequent procedure is as indicated in Example II and a product is obtained which has a good, homogeneous structure, a butter taste and good spreadability at approximately 7°C.

EXAMPLE VI

Example I is repeated using 750 kg of 45% milk cream, 1900 kg of solidified transesterified fat obtained from palm oil and coconut, having a melting point between 32 and 42°C, and 300 kg of soya oil. A product having the same excellent characteristics and butter taste and aroma as obtained according to example I is obtained.

EXAMPLE VII

The procedures described in the examples III-VI were repeated using 1250 kg sunflower oil instead of 1850 kg sunflower oil. All thus obtained products had a very homogeneous structure, were not sticky in the mouth and had a clearly detectable taste and aroma of butter. The spreadability at approximately 7°C was particularly good.

**Claims**

1. Spread of the water-in-oil type comprising an intimate mixture of particles of vegetable fats and of milk fat, characterized in that the spread possesses a structure which is to be obtained by forming an emulsion of at least water, molten vegetable fats and/or oils, a milk cream phase with a milk fat content of 5-70% and 0.5-3% of a lactic acid bacterial culture, subjecting this emulsion to a mechanical treatment while cooling to below 20°C and finally separating off the product obtained and storing it at a conversion temperature at which the lactic acid bacteria form lactic acid and butter aroma substances from substances belonging to the milk cream phase.

2. Spread according to Claim 1, characterized in that vegetable fats having a melting point above 20°C, and vegetable fluid oil are present, such that the total fat mixture contains at least 40% polyunsaturated fatty acids, the spread comprising preferably more than 30% of water.

3. Spread according to Claim 1, characterized in that the milk cream phase has a milk fat content of 10-60%, preferably 20-40%.

4. Spread according to Claim 1, characterized in that the product to be separated off after the mechanical treatment contains cream particles from which butter particles separate out on storage.

5. Spread according to Claim 1-4, characterized in that during the mechanical treatment cooling is interrupted after cooling to a temperature above 20°C and the temperature rises during the mechanical treatment with the growth of fat kernels to fat crystals, after which cooling is continued with mechanical treatment to below 20°C and a product is then separated off in which cream particles are embedded in a solid structure of said fat crystals, from which cream particles butter particles separate out during storage, during which storage the conversion temperature is lower than 20°C and preferably between 5 and 15°C.

6. Spread according to Claim 5, characterized in that the temperature rises by a minimum of 0.5°C and by a maximum of up to 0.5°C below the melting point of the fat mixture during the phase of mechanical treatment without cooling, preferably 2° to 8°C, after the mechanical treatment the temperature of the emulsion is lowered to below 20°C, preferably to 5-15°C, and during the mechanical treatment and cooling to a temperature above 20°C, 5 to 70% of the latent heat of crystallization of the fats crystallizable above 10°C has been removed.

7. Method for the preparation of a spread of the water-in-oil type comprising an intimate mixture of particles of vegetable fats and of milk fat, characterized in that a spread is continuously prepared which has a structure which is to be obtained by forming an emulsion of at least water, molten vegetable fats and/or oils, a milk cream phase with a milk fat content of 5-70% and 0.5-3% of a lactic acid bacterial culture, subjecting this emulsion to a mechanical treatment while cooling to below 20°C and finally separating off the product thus obtained and storing it at a conversion temperature at which the lactic acid bacteria form lactic acid and butter aroma substances from substances belonging to the milk cream phase.

8. Method according to Claim 7, characterized in that vegetable fats having a melting point above 20°C and vegetable fluid oil are used, such that the total fat mixture contains at least 40% polyunsaturated fatty acids, and the spread preferably comprises more than 30% of water.

9. Method according to Claim 7, characterized in that a milk cream phase having a milk fat content of 10-60%, preferably 20-40% is used.

10. Method according to Claim 9, characterized in that the duration of the total mechanical treatment and the temperature are chosen such that the product to be separated off after the mechanical treatment contains cream particles from which butter particles separate out on storage.

11. Method according to Claim 7-9, characterized in that the cooling is interrupted during the mechanical treatment, after cooling to a temperature above 20°C, and the temperature is allowed to rise while continuing the mechanical treatment, during which period fat kernels grow to fat crystals, after which cooling is continued, with mechanical treatment, to below 20°C and a product is then separated off in which cream particles are embedded in a solid structure of said fat crystals, from which cream particles butter particles are separated out during storage, the conversion temperature during storage being lower than 20°C and preferably between 5 and 15°C.

12. Method according to Claim 7-11, characterized in that the temperature is allowed to rise by a minimum of 0.5°C and by a maximum of up to 0.5°C below the melting point of the fat mixture, preferably by 2-8°C during the phase of mechanical treatment without cooling, the temperature of the emulsion is lowered to below 20°C, preferably to 5-15°C, after the mechanical treatment, and 5 to 70% of the latent heat of crystallization of the fats crystallizable above 10°C is removed during the mechanical treatment and cooling to a temperature above 20°C.

**Patentansprüche**

1. Brotaufstrich vom Wasser-in-Öl-Typ, enthaltend ein inniges Gemisch von Teilchen von pflanzlichen Fetten und von Milchfett, dadurch gekennzeichnet, daß der Brotaufstrich eine Struktur besitzt, die zu erhalten ist, indem man eine Emulsion aus mindestens Wasser, geschmolzenen pflanzlichen Fetten und/oder Ölen, einer Milchrahmphase mit einem Milchfettgehalt von 5-70 % und 0,5-3 % einer Milchsäure-Bakterienkultur bildet, diese Emulsion einer mechanischen Behandlung unterwirft, wobei man sie unter 20°C kühlt, und schließlich das erhaltene Produkt abscheidet und es bei einer Umwandlungstemperatur lagert, bei der Milchsäurebakterien Milchsäure und Butteraromasubstanzen aus Substanzen, die zur Milchrahmphase gehören, bilden.

2. Brotaufstrich nach Anspruch 1, dadurch gekennzeichnet, daß pflanzliche Fette mit einem Schmelzpunkt über 20°C und pflanzliches flüssiges Öl in solchen Mengen vorliegen, daß das gesamte Fettgemisch mindestens 40 % mehrfach ungesättigte Fettsäuren enthält, wobei der Brotaufstrich vorzugsweise mehr als 30 % Wasser enthält.

3. Brotaufstrich nach Anspruch 1, dadurch gekennzeichnet, daß die Milchrahmphase einen Milchfettgehalt von 10-60 % und vorzugsweise 20-40 % aufweist.

4. Brotaufstrich nach Anspruch 1, dadurch gekennzeichnet, daß das nach der mechanischen Behandlung abzuscheidende Produkt Rahmteilchen enthält, aus denen sich bei der Lagerung Butterteilchen abscheiden.

5. Brotaufstrich nach Anspruch 1-4, dadurch gekennzeichnet, daß während der mechanischen Behandlung die Kühlung nach dem Abkühlen auf eine Temperatur über 20°C unterbrochen wird und die Temperatur während der mechanischen Behandlung unter Wachstum von Fettkernen zu Fettkristallen ansteigt, wonach die Kühlung unter mechanischer Behandlung auf unter 20°C fortgesetzt wird und anschließend ein Produkt abgeschieden wird, in dem Rahmteilchen in einer festen Struktur der Fettkristalle eingebettet sind, wobei sich während der Lagerung aus den Rahmteilchen Butterteilchen abscheiden und wobei während der Lagerung die Umwandlungstemperatur unter 20°C und vorzugsweise zwischen 5 und 15°C liegt.

6. Brotaufstrich nach Anspruch 5, dadurch gekennzeichnet, daß die Temperatur während der Phase der mechanischen Behandlung ohne Kühlung mindestens 0,5°C und höchstens bis zu 0,5°C unterhalb des Schmelzpunktes des Fettgemisches ansteigt, vorzugsweise 2-8°C, die Temperatur der Emulsion nach der mechanischen Behandlung auf unter 20°C und vorzugsweise 5-15°C verringert wird, und während der mechanischen Behandlung und Kühlung auf eine Temperatur über 20°C 5-70 % der latenten Kristallisationswärme der über 10°C kristallisierbaren Fette entfernt worden sind.

7. Verfahren zur Herstellung eines Brotaufstrichs vom Wasser-in-Öl-Typ, enthaltend ein inniges Gemisch von Teilchen von pflanzlichen Fetten und von Milchfett, dadurch gekennzeichnet, daß ein Brotaufstrich kontinuierlich hergestellt wird, der eine Struktur aufweist, die zu erhalten ist, indem man eine Emulsion aus mindestens Wasser, geschmolzenen pflanzlichen Fetten und/oder Ölen, einer Milchrahmphase mit einem Milchfettgehalt von 5-70 % und 0,5-3 % einer Milchsäure-Bakterienkultur bildet, diese Emulsion einer mechanischen Behandlung unterwirft, wobei man sie unter 20°C kühlt, und schließlich das erhaltene Produkt abscheidet und es bei einer Umwandlungstemperatur lagert, bei der Milchsäurebakterien Milchsäure und Butteraromasubstanzen aus Substanzen, die zur Milchrahmphase gehören, bilden.

8. Verfahren nach Anspruch 7, dadurch gekennzeichnet, daß pflanzliche Fette mit einem Schmelzpunkt über 20°C und pflanzliches flüssiges Öl in solchen Mengen vorliegen, daß das gesamte Fettgemisch mindestens 40 % mehrfach ungesättigte Fettsäuren enthält, wobei der Brotaufstrich vorzugsweise mehr als 30 % Wasser enthält.

9. Verfahren nach Anspruch 7, dadurch gekennzeichnet, daß die Milchrahmphase einen Milchfettgehalt von 10-60 % und vorzugsweise 20-40 % aufweist.

10. Verfahren nach Anspruch 9, dadurch gekennzeichnet, daß die Dauer der gesamten mechanischen Behandlung und die Temperatur so gewählt werden, daß das nach der mechanischen Behandlung abzuschneidende Produkt Rahmteilchen enthält, aus denen sich bei der Lagerung Butterteilchen abscheiden.

11. Verfahren nach Anspruch 7-9, dadurch gekennzeichnet, daß während der mechanischen Behandlung die Kühlung nach dem Abkühlen auf eine Temperatur über 20°C unterbrochen wird und die Temperatur während der mechanischen Behandlung unter Wachstum von Fettkernen zu Fettkristallen ansteigt, wonach die Kühlung unter mechanischer Behandlung auf unter 20°C fortgesetzt wird und anschließend ein Produkt abgeschieden wird, in dem Rahmteilchen in einer festen Struktur der Fettkristalle eingebettet sind, wobei sich während der Lagerung aus den Rahmteilchen Butterteilchen abscheiden und wobei während der Lagerung die Umwandlungstemperatur unter 20°C und vorzugsweise zwischen 5 und 15°C liegt.

12. Verfahren nach Anspruch 7-11, dadurch gekennzeichnet, daß die Temperatur während der Phase der mechanischen Behandlung ohne Kühlung mindestens 0,5°C und höchstens bis zu 0,5°C unterhalb des Schmelzpunktes des Fettgemisches ansteigt, vorzugsweise 2-8°C, die Temperatur der Emulsion nach der mechanischen Behandlung auf unter 20°C und vorzugsweise 5-15°C verringert wird und während der mechanischen Behandlung und Kühlung auf eine Temperatur über 20°C 5-70 % der latenten Kristallisationswärme der über 10°C kristallisierbaren Fette entfernt worden sind.

**Revendications**

1. Pâte à tartiner du type eau-dans-huile, comprenant un mélange intime de particules de graisses végétales et de graisse de lait, caractérisée par le fait que la pâte à tartiner possède une structure qui est susceptible d'être obtenue par les opérations consistant à former une émulsion au moins d'eau, de graisses et/ou huiles végétales fondues, d'une phase de crème de lait ayant une teneur en graisse de lait de 5-70% et de 0,5-3% d'une culture de bactéries à acide lactique, à soumettre cette émulsion à un traitement mécanique tout en refroidissant jusqu'à une température inférieure à 20°C, et finalement à séparer le produit obtenu et à le stocker à une température de conversion à laquelle les bactéries à acide lactique forment de l'acide lactique et des substances d'arôme de beurre à partir de substances appartenant à la phase de crème de lait.

2. Pâte à tartiner selon la revendication 1, caractérisée par le fait que des graisses végétales, ayant un point de fusion se situant au-dessus de 20°C, et une huile fluide végétale sont présentes, de telle sorte que le mélange total des graisses contienne au moins 40% d'acides gras polyinsaturés, la pâte à tartiner comprenant, de préférence, plus de 30% d'eau.

3. Pâte à tartiner selon la revendication 1, caractérisée par le fait que la phase de crème de lait présente une teneur en graisse de lait de 10-60%, de préférence, de 20-40%.

4. Pâte à tartiner selon la revendication 1, caractérisée par le fait que le produit devant être séparé après le traitement mécanique contient des particules de crème à partir desquelles des particules de beurre se séparent lors du stockage.

5. Pâte à tartiner selon l'une quelconque des revendications 1 à 4, caractérisée par le fait que, pendant le traitement mécanique, le refroidissement est interrompu après refroidissement jusqu'à une température se situant au-dessus de 20°C et la température s'élève pendant le traitement mécanique avec la croissance de noyaux de graisse en cristaux de graisse, après quoi le refroidissement est poursuivi avec traitement mécanique jusqu'à une température inférieure à 20°C et un produit est ensuite séparé, dans lequel des particules de crème sont noyées dans une structure solide desdits cristaux de graisse, particules de crème à partir desquelles des particules de beurre se séparent pendant le stockage, la température de conversion pendant ce stockage étant inférieure à 20°C et se situant, de préférence, entre 5 et 15°C.

6. Pâte à tartiner selon la revendication 5, caractérisée par le fait que la température s'élève d'un minimum de 0,5°C et d'un maximum allant jusqu'à 0,5°C au-dessous du point de fusion du mélange de graisses pendant la phase de traitement mécanique sans refroidissement, de préférence, de 2° à 8°C, après le traitement mécanique, la température de l'émulsion est abaissée jusqu'à une valeur inférieure à 20°C, de préférence, à 5-15°C, et, pendant le traitement mécanique et le refroidissement jusqu'à une température se situant au-dessus de 20°C, 5 à 70% de la chaleur latente de cristallisation des graisses cristallisables au-dessus de 10°C ont été éliminés.

7. Procédé de fabrication d'une pâte à tartiner du type eau-dans-huile, comprenant un mélange intime de particules de graisses végétales et de graisse de lait, caractérisé par le fait qu'une pâte à tartiner est préparée en continu, laquelle présente une structure qui est susceptible d'être obtenue par les opérations consistant à former une émulsion au moins d'eau, de graisses et/ou huiles végétales fondues, d'une phase de crème de lait présentant une teneur en graisse de lait de 5-70%, et de 0,5-3% d'une culture de bactéries à acide lactique, à soumettre cette émulsion à un traitement mécanique tout en refroidissant jusqu'à une température inférieure à 20°C, et finalement à séparer le produit ainsi obtenu et à le stocker à une température de conversion à laquelle les bactéries à acide lactique forment de l'acide lactique et des substances d'arôme de beurre à partir de substances appartenant à la phase de crème de lait.

8. Procédé selon la revendication 7, caractérisé par le fait que des graisses végétales ayant un point de fusion se situant au-dessus de 20°C et une huile fluide végétale sont utilisées, de telle sorte que le mélange total des graisses contienne au moins 40% d'acides gras polyinsaturés, et la pâte à tartiner comprend, de préférence, plus de 30% d'eau.

9. Procédé selon la revendication 7, caractérisé par le fait qu'une phase de crème de lait ayant une teneur en graisse de lait de 10-60%, de préférence, de 20-40%, est utilisée.

10. Procédé selon la revendication 9, caractérisé par le fait que la durée du traitement mécanique total et la température sont choisies de telle sorte que le produit devant être séparé après le traitement mécanique contienne des particules de crème à partir desquelles des particules de beurre se séparent lors du stockage.

11. Procédé selon l'une quelconque des revendications 7 à 9, caractérisé par le fait que le refroidissement est interrompu pendant le traitement mécanique, après refroidissement jusqu'à une température se situant au-dessus de 20°C, et la température est amenée à s'élever tout en poursuivant le traitement mécanique, période pendant laquelle des noyaux de graisse subissent une croissance en cristaux de graisse, après quoi le refroidissement est poursuivi, avec traitement mécanique, jusqu'à une température se situant au-dessous de 20°C, et un produit est ensuite séparé, dans lequel des particules de crème sont noyées dans une structure solide desdits cristaux de graisse, particules de crème à partir desquelles des particules de beurre se séparent pendant le stockage, la température de conversion pendant le stockage étant inférieure à 20°C et, de préférence, se situant entre 5 et 15°C.

12. Procédé selon l'une quelconque des revendications 7 à 11, caractérisé par le fait que la température est amenée à s'élever d'un minimum de 0,5°C et d'un maximum allant jusqu'à 0,5°C au-dessous du point de fusion du mélange de graisses, de préférence, de 2-8°C pendant la phase de traitement mécanique sans refroidissement, la température de l'émulsion est abaissée jusqu'à une valeur inférieure à 20°C, de préférence, à 5-15°C, après le traitement mécanique, et 5 à 70% de la chaleur latente de cristallisation des graisses cristallisables au-dessus de 10°C sont éliminés pendant le traitement mécanique et le refroidissement jusqu'à une température se situant au-dessus de 20°C.